(19) Europäisches Patentamt
European Patent Office
Office européen des brevets

(11) **EP 1 107 120 B1**

(12) **FASCICULE DE BREVET EUROPEEN**

(45) Date de publication et mention de la délivrance du brevet:
**11.02.2004 Bulletin 2004/07**

(51) Int Cl.⁷: **G06F 11/07**, H04B 1/16, H04M 1/725

(21) Numéro de dépôt: **00204129.1**

(22) Date de dépôt: **22.11.2000**

(54) **Appareil comportant un dispositif d'alimentation et procédé de mise et remise en route des appareils soumis à des microcoupures de tension d'alimentation**

Vorrichtung mit Energieversorgungseinrichtung und Verfahren zum Anlaufen/Wiederanlaufen der Mikrostromversorgungsausfällen unterworfenen Vorrichtungen

Apparatus provided with power supply device and start-up/restart method for apparatus exposed to micro-outages of power supply

(84) Etats contractants désignés:
**DE FR GB IT**

(30) Priorité: **30.11.1999 FR 9915045**

(43) Date de publication de la demande:
**13.06.2001 Bulletin 2001/24**

(73) Titulaire: **Koninklijke Philips Electronics N.V.**
**5621 BA Eindhoven (NL)**

(72) Inventeur: **Ricordel, Eloi**
**75008 Paris (FR)**

(74) Mandataire: **Chaffraix, Jean**
**Société Civile S.P.I.D.**
**156, Boulevard Haussmann**
**75008 Paris (FR)**

(56) Documents cités:
EP-A- 0 817 392        US-A- 4 658 352
US-A- 5 390 322        US-A- 5 438 695
US-A- 5 708 589

**Description**

L'invention concerne un appareil comportant :

- un circuit processeur (10) auquel sont rattachés des registres,
- un dispositif d'alimentation (15) pour lui fournir une tension d'alimentation,
- un circuit de coupure (20) pour détecter des coupures de cette tension d'alimentation,
- une mémoire (12) alimentée à partir de ce dispositif d'alimentation,
- un dispositif de chargement d'information pour cette mémoire,
- un dispositif de redémarrage pour initialiser l'appareil,

L'invention concerne également un procédé de mise et remise en route des appareils soumis à des coupures de tension d'alimentation.

L'invention trouve son application dans les appareils téléphoniques portables faisant partie de réseaux de radiotéléphonie du type cellulaire.

Un problème qui se pose avec ce genre d'appareil est l'extinction intempestive due à des coupures de l'alimentation en énergie électrique de l'appareil. Ceci survient par exemple par un choc mécanique qui provoque une microcoupure de la tension d'alimentation. Après cette microcoupure, qui doit être détectée, il convient de s'assurer de l'opportunité de certaines mesures prises après cette détection. On pourra à ce sujet consulter le document de brevet Européen n° EP 0 607 919.

Dans ce document, on mesure la durée de la microcoupure de la tension d'alimentation au moyen d'un dispositif de comptage qui implique la présence d'une batterie auxiliaire pour l'alimenter durant les coupures et en fonction de cette durée, différentes mesures sont prises.

La présente invention propose de rendre plus sûre la reprise du fonctionnement de l'appareil après une microcoupure sans nécessiter de batterie auxiliaire ni de circuits trop complexes.

Pour cela, un tel appareil est remarquable en ce qu'il comporte, en outre :

- un dispositif de contrôle de l'intégrité de la mémoire mis en oeuvre par une détection de coupure fournie par ledit circuit de coupure

   et en ce que le dispositif de redémarrage est formé par :

   - un circuit de redémarrage complet si ladite mémoire est altérée,
   - un circuit de redémarrage allégé si ladite mémoire n'est pas altérée, pour remettre à jour, lesdits registres à partir des données contenues dans ladite mémoire.

Si l'appareil était éteint avant la réapparition de l'alimentation, il n'y a pas lieu non plus de redéclencher le dispositif de redémarrage.

Un procédé de mise et remise en route est remarquable en ce que lorsqu'une microcoupure a été détectée, l'intégrité de ladite mémoire vive est testée, le processus de redémarrage étant allégé si le contenu de la mémoire vive n'a pas été altéré pendant la microcoupure.

Les caractéristiques qui sont définies dans le préambule de la revendication 1 sont divulguées dans le document US-A-5 708 589.

La description suivante, en regard des dessins ci-annexés, le tout donné à titre d'exemple non limitatif, fera bien comprendre comment l'invention peut être réalisée. Sur les dessins :

   La FIG.1 représente un appareil conforme à l'invention.
   La FIG.2 représente un schéma du circuit de redémarrage du fonctionnement de l'appareil.
   La FIG.3 représente un organigramme explicitant le fonctionnement de l'appareil de l'invention.
   La FIG.4 représente un autre organigramme explicitant le fonctionnement de l'appareil de l'invention

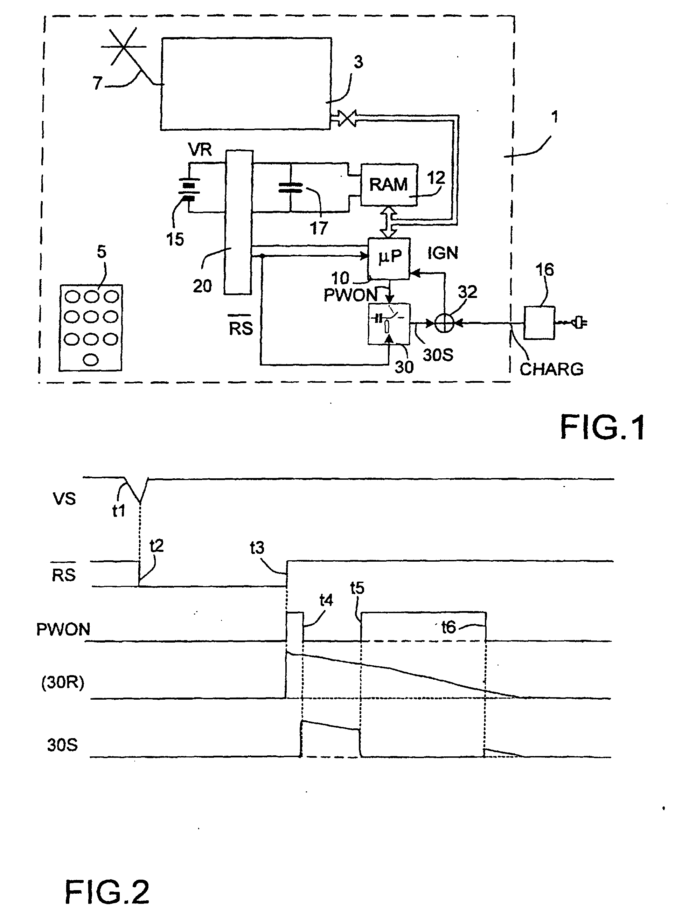

La figure 1 représente un appareil 1 conforme à l'invention. Cet appareil est, dans le cadre de l'exemple décrit, un appareil de téléphonie portable du type cellulaire. Cet appareil comporte, notamment, un circuit d'émission-réception 3 auquel est raccordée une antenne 7, un clavier 5 et un processeur 10 coopérant avec une mémoire vive 12 pour régir son fonctionnement. Cet appareil est alimenté par une batterie 15 qui fournit une tension VS. En outre, un chargeur de batterie 16 peut être présent pour alimenter l'appareil et recharger la batterie. La présence de ce chargeur est détectée par un signal transmis sur un fil CHARG.

La mémoire vive 12 contient des données d'initialisation et d'authentification qui permettent la connexion avec le réseau. Lorsqu'une coupure de durée plus ou moins brève de la tension d'alimentation fournie par la batterie survient, la mémoire vive 12 risque de ne plus être alimentée et son contenu peut être effacé. S'il est judicieux de recommencer le processus de démarrage et d'authentification après une coupure pour recharger la mémoire des données utiles pour la connexion, ceci peut éventuellement impliquer des entrées de données relatives au mot de passe au moyen du clavier 5. Il faut se rendre compte que ce processus est long et ennuyeux pour l'utilisateur. Il faut également considérer que la mémoire vive 12 est alimentée par la batterie par l'intermédiaire d'un condensateur 17. Si la microcoupure a une durée courte vis-à-vis de la durée de décharge de ce condensateur 17, le contenu de la mémoire peut donc être intact et il est inutile de recommencer le processus de démarrage et d'authentification de l'utilisateur auprès du réseau.

Pour éviter le déroulement de démarrages intempestifs, l'appareil comporte un dispositif de contrôle de l'intégrité de la mémoire. Ce dispositif de contrôle implique la participation du processeur 10 qui déclenche ce contrôle de l'intégrité lorsqu'une microcoupure a été détectée. Cette détection s'effectue au moyen d'un circuit distributeur d'alimentation 20 qui fournit un signal $\overline{RS}$ à un circuit dérivateur 30, sensible aux fronts montants de ce signal. Ce signal $\overline{RS}$ prend la valeur " 0 " dès que la tension détectée est inférieure à un seuil VR, par exemple la moitié de la tension de batterie nominale. Lorsque la tension VS de la batterie devient supérieure à VR le signal $\overline{RS}$ prend la valeur "1" après une durée égale à TS.

Un signal logique PWON est fourni par le processeur 10. La valeur de ce signal dépend, entre autres, du processus de détection de l'intégrité de la mémoire 12. Ce signal met à zéro le signal de sortie du circuit dérivateur 30, lorsqu'il a la valeur " 1 ".

Un circuit additionneur 32 additionne les signaux à la sortie 30S du circuit dérivateur avec les signaux véhiculés par le fil CHARG. Le signal de sortie de ce circuit 20 est appliqué à l'entrée IGN du processeur pour déclencher le processus de démarrage lorsqu'il est actif.

Le diagramme temps de la figure 2 explicite ce fonctionnement. On considère l'instant t1 où survient une microcoupure. Comme la tension descend rapidement en dessous de la tension de seuil VR, le signal $\overline{RS}$ prend aussitôt la valeur "0" à l'instant t2, pour une certaine durée. Puis survient à l'instant t3 un front montant de $\overline{RS}$. Ceci donne, à l'intérieur du circuit dérivateur 30, une tension dont l'allure est montrée à la ligne (30R) de la figure 2. Cette tension monte rapidement puis va décroître lentement à cause de la perte de charge du condensateur qui compose ce circuit dérivateur. Ce front montant détecté par le processeur provoque une valeur égale à " 1 " du signal PWON pour une certaine durée (≈32 ms, pour fixer les idées), la valeur " 0 ", que prend ensuite le signal PWON, autorise la transmission du signal 30R à la sortie 305, ceci crée donc un début d'impulsion qui démarre le processus d'intégrité du contenu de la mémoire 12. Ce début d'impulsion est appliqué à l'entrée IGN.

A l'instant t5, le signal PWON reprend la valeur " 1 " et coupe donc l'impulsion à l'entrée IGN.

L'instant t6 correspond à la prise de décision qui découle du processus de vérification de l'intégrité de la mémoire 12. Si on considère que le contenu de la mémoire 12 est correct, alors le signal PWON garde la valeur " 1 ", sinon, il passe à zéro.

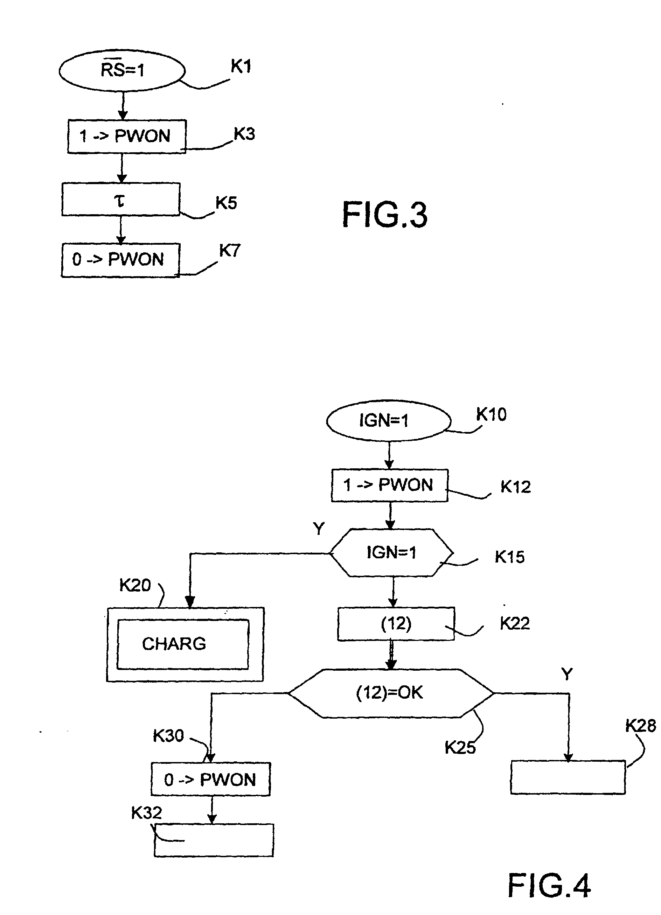

A la figure 3 est représenté l'organigramme des étapes de fonctionnement lorsqu'un front montant de $\overline{RS}$ apparaît. Ces étapes consistent à former l'impulsion de PWON entre t3 et t4 (fig.2). A la case K1, on indique l'apparition de ce front montant ; la case K3 indique que le signal PWON est mis à " 1 ", la case K5 indique que l'impulsion aura une certaine largeur et la case K7 indique finalement que le signal PWON est mis à " 0 ".

A partir de ce moment, le processus est déterminé par le signal IGN, ce qui est indiqué à la figure 4.

La case K10 indique le début du processus lorsque le signal IGN prend la valeur " 1 ". La case K12 indique que l'on force le signal PWON à prendre la valeur "1". Puis, case K15, on teste à nouveau le signal IGN. Si cette valeur est égale à " 1 " cela signifie que le chargeur est branché, ce signal " 1 " étant amené par le fil CHARG, par l'intermédiaire du circuit additionneur 32. On effectue les tâches affectées à ce genre de situation, par exemple allumage de l'écran etc.. (case K20). Si le signal IGN n'a pas la valeur " 1 " alors on examine les informations d'intégrité contenues dans la mémoire 12 (case K22), puis on les teste (case K25). Si tout est correct, on reconfigure les données du processeur, on recharge des registres à partir des données contenues dans la mémoire 12 qui sauvegarde ce genre d'informations (case K28). Il est à noter que cette mémoire est moins sensible aux microcoupures par sa nature même et aussi par la présence du condensateur 17.

Si le test de la case K25 est négatif, alors le signal PWON est mis à " 0 ", (case K30) et on déclenche les procédures de réinitialisation et d'authentification (case K32).

On remarquera que l'on utilise une seule entrée IGN du microprocesseur pour traiter les données de microcoupures et la gestion de l'appareil lorsque le chargeur 16 est branché en vue de recharger la batterie 15 de type rechargeable.

On peut dire que l'intégrité de la mémoire 12 n'est pas respectée lorsqu'une valeur mise au démarrage est différente lors de sa lecture. Si les valeurs logiques contenues dans la mémoire 12 ont une valeur "0", ce qui correspond à l'état initial de la mémoire lorsqu'elle n'est plus alimentée depuis longtemps, alors la mémoire a perdu son intégrité, son contenu a donc été effacé.

**Revendications**

1. Appareil comportant :

   - un circuit processeur (10) auquel sont rattachés des registres,
   - un dispositif d'alimentation (15) pour lui fournir une tension d'alimentation,
   - un circuit de coupure (20) pour détecter des coupures de cette tension d'alimentation,
   - une mémoire (12) alimentée à partir de ce dispositif d'alimentation,
   - un dispositif de chargement d'information pour cette mémoire,
   - un dispositif de redémarrage pour initialiser l'appareil,

**caractérisé en ce qu'**il comporte en outre :

- un dispositif de contrôle de l'intégrité de la mémoire (12) mis en oeuvre par une détection de coupure fournie par ledit circuit de coupure (20)

et **en ce que** le dispositif de redémarrage est formé par

- un circuit de redémarrage complet si ladite mémoire (12) est altérée,
- un circuit de redémarrage allégé si ladite mémoire (12) n'est pas altérée, pour remettre à jour, lesdits registres à partir des données contenues dans ladite mémoire (12).

**2.** Appareil selon la revendication 1 destiné à être utilisé comme appareil téléphonique portable faisant partie d'un réseau de radiotéléphonie du type cellulaire, nécessitant au démarrage une phase d'authentification auprès du réseau, **caractérisé en ce que** le circuit de redémarrage allégé supprime cette phase d'authentification.

**3.** Appareil selon la revendication 1 ou 2, **caractérisé en ce que** le dispositif de redémarrage est inhibé si l'appareil était éteint avant ladite coupure.

**4.** Appareil selon la revendication 1 ou 3, **caractérisé en ce qu'**il est prévu une information insérée dans ladite mémoire dont la valeur est différente de l'information contenue lorsque cette mémoire n'est plus alimentée.

**5.** Appareil selon l'une des revendication 1 à 4 pour lequel le dispositif d'alimentation est constitué à partir d'une batterie rechargeable et qui comporte une entrée de redémarrage, **caractérisé en ce que** cette entrée est aussi reliée à un fil de présence d'un chargeur (16) pour inhiber le dispositif de redémarrage lorsqu'une présence est détectée.

**6.** Procédé de mise et de remise en route d'un appareil selon l'une des revendications 1 à 5 comportant un processeur auquel sont rattachés des registres et une mémoire vive (12); **caractérisé en ce que** lorsqu'une coupure a été détectée, l'intégrité de ladite mémoire vive (12) est testée, le processus de redémarrage étant allégé, consistant à réinitialiser lesdits registres à partir des données contenues dans ladite mémoire (12) si son contenu n'a pas été altéré pendant la coupure.

**Claims**

**1.** An apparatus comprising:

- a processing circuit (10) to which registers are connected,
- a supply device (15) to supply a supply voltage to the circuit,
- a power cut circuit (20) to detect cuts in this supply voltage,
- a memory (12) fed by this power supply device,
- an information loading device for this memory,
- a restarting device to initialize the apparatus,

**characterized in that** it further comprises:

- a control device for controlling the integrity of the memory (12) used by a detection of a power cut produced by said power cut circuit (20),

and **in that** the restarting device is constituted by:

- a complete restarting circuit if said memory (12) is altered,
- an ameliorated restarting circuit if said memory (12) is not altered, to update said registers based on data contained in said memory (12).

**2.** An apparatus as claimed in claim 1, intended to be used as a portable telephone forming part of a cellular radiotelephone network requiring at the start an authentication with the network, **characterized in that** the ameliorated restarting circuit suppresses this authentication phase.

**3.** An apparatus as claimed in claim 1 or 2, **characterized in that** restarting circuit is inhibited if the apparatus was dead before said power cut.

**4.** An apparatus as claimed in one of the claims 1 to 3, **characterized in that** information is provided inserted in said memory whose value is different from the information contained when this memory is no longer supplied with power.

**5.** An apparatus as claimed in any one of the claims 1 to 4 for which the power supply device is constituted by a rechargeable battery and which has a restart input, **characterized in that** this input is also connected to a wire indicating the presence of a charger (16) to inhibit the restarting device when a presence is detected.

**6.** A method of starting-up and restarting an apparatus as claimed in one of the claims 1 to 5, comprising a processor to which are connected registers and a random-access memory (12), **characterized in that** when a power cut has been detected, the integrity of said random-access memory (12) is tested, while the restart process is improved, consisting of a re-initialization of said registers based on data contained in said memory (12) if the contents have not been changed during the power cut.

**Patentansprüche**

1.  Gerät mit:

    -   einer Prozessorschaltung (10), an die Register angeschlossen sind,
    -   einer Versorgungsvorrichtung (15), um ihr einen Versorgungsstrom zu liefern,
    -   einer Unterbrecherschaltung (20) zur Erkennung von Ausfällen dieser Stromversorgung,
    -   einem Speicher (12), der von dieser Stromversorgung gespeist wird,
    -   einer Informationsladevorrichtung für diesen Speicher,
    -   einer Wiederanlaufvorrichtung zur Initialisierung der Vorrichtung,

    **dadurch gekennzeichnet, dass** es außerdem aufweist:

    -   eine Vorrichtung zur Kontrolle der Speicherintegrität (12), bewerkstelligt über eine von der besagten Unterbrecherschaltung (20) bereitgestellte Ausfallserkennung,

    und **dadurch, dass** die Wiederanlaufvorrichtung gebildet wird aus:

    -   einer kompletten Wiederanlaufvorrichtung, wenn der besagte Speicher (12) beschädigt ist,
    -   einer geschmälerten Wiederanlaufvorrichtung, wenn der besagte Speicher (12) nicht beschädigt ist, um die besagten Register anhand der in dem besagten Speicher (12) enthaltenen Daten zu aktualisieren.

2.  Gerät nach Anspruch 1 zur Verwendung als tragbares Telefongeräte in einem Funktelefonnetz, das zum Anlaufen eine Identifizierungsphase im Netz erfordert, **dadurch gekennzeichnet, dass** die geschmälerte Wiederanlaufschaltung diese Identifizierungsphase unterlässt.

3.  Gerät nach einem der Ansprüche 1 oder 2, **dadurch gekennzeichnet, dass** die Wiederanlaufvorrichtung gesperrt ist, wenn das Gerät vor dem besagten Ausfall abgeschaltet war.

4.  Gerät nach einem der Ansprüche 1 oder 3, **dadurch gekennzeichnet, dass** eine in den besagten Speicher eingefügte Information vorgesehen ist, deren Wert von der Information, die enthalten ist, wenn dieser Speicher nicht mehr versorgt wird, abweicht.

5.  Gerät nach einem der Ansprüche 1 bis 4, dessen Versorgungsvorrichtung aus einem aufladbaren Akku gebildet wird und der einen Wiederanlaufeingang aufweist, **dadurch gekennzeichnet, dass** dieser Eingang auch mit einem Kabel verbunden ist, der ein angeschlossenes Ladegerät (16) meldet, um gegebenenfalls die Wiederanlaufvorrichtung zu sperren.

6.  Verfahren zum Anlaufen und Wiederanlaufen eines Gerätes nach einem der Ansprüche 1 bis 5 mit einem Prozessor, an den Register und ein Aktivspeicher (12) angeschlossen sind, **dadurch gekennzeichnet, dass** wenn ein Mikrostromausfall erkannt wurde, die Integrität des besagten Aktivspeichers (12) getestet wird, wobei man das Wiederanlaufen, das darin besteht, die besagten Register anhand der in dem besagten Speicher (12) enthaltenen Daten neu zu initialisieren, schmälert, wenn sein Inhalt während dem Stromausfall nicht beschädigt wurde.

FIG.1

FIG.2

FIG.3

FIG.4